# EUROPÄISCHE PATENTSCHRIFT

(11) **EP 1 911 146 B1**
(45) Veröffentlichungstag und Bekanntmachung des Hinweises auf die Patenterteilung: **22.07.2009**
(21) Anmeldenummer: 06753705.0
(22) Anmeldetag: 18.05.2006
(51) Int. Cl.: H02P 3/12, H02P 3/14, H02P 6/00, D01H 4/14, F16C 32/06

(54) **ELEKTROMOTOR**
ELECTRIC MOTOR
MOTEUR ELECTRIQUE

(30) Priorität: 27.07.2005 DE 102005035055
(43) Veröffentlichungstag der Anmeldung: 16.04.2008
(73) Patentinhaber: Oerlikon Textile GmbH & Co. KG, 42897 Remscheid (DE)
(72) Erfinder: COENEN, Norbert, 41199 Mönchengladbach (DE)
(74) Vertreter: Hamann, Arndt
(86) Internationale Anmeldenummer: PCT/EP2006/004717
(87) Internationale Veröffentlichungsnummer: WO 2007/012358

(56) Entgegenhaltungen:
- DE-A1- 2 238 627
- DE-A1- 4 421 406
- DE-A1- 19 518 991

## Beschreibung

### Elektromotor

Die vorliegende Erfindung betrifft einen Elektromotor mit den Merkmalen des Oberbegriffs des Anspruchs 1 sowie die Verwendung des Elektromotors als Einzelantrieb gemäß den Merkmalen des Oberbegriffs des Anspruchs 14.

Bei der Verwendung von Elektromotoren als Antrieb von Rotoren, insbesondere von Rotoren für Textilmaschinen, die als Läufer des Elektromotors ausgebildet sind, ist es erforderlich, den Elektromotors, der bei Ausfall der Versorgungsspannung als Generator betreibbar ist, innerhalb einer bestimmten Zeit zum Stillstand zu bringen, um Schäden der Lagerung des Rotors durch Taumelbewegungen während des Auslaufens des Rotors bis zu dessen Stillstand zu vermeiden.

Aus der Offenlegungsschrift DE 44 21 406 A1 ist ein mehrphasiger Elektromotor als Antrieb eines Rotors bekannt, der als Spinnrotor einer Offenend-Rotorspinnmaschine ausgebildet ist. Der Elektromotor arbeitet bei Ausfall der Versorgungsspannung generatorisch, bis der Elektromotor bei Passieren eines kritischen Grenzwertes, bei welchem die Aufrechterhaltung des generatorische Betriebes nicht mehr sinnvoll ist, durch Kurzschließen abgebremst wird. Die Motorschaltung des Elektromotors umfasst Halbleiterbauelemente, die für das phasenweise Takten des Stromflusses sowie der Stromflussrichtung für die Motorwicklungen zuständig sind. Darüber hinaus umfasst die Motorschaltung zwei Relais, welche bei Auftreten eines Spannungsausfalles jeweils einen Leitungszug kurzschließen, von denen der eine Leitungszug einen Lastwiderstand aufweist. Nach dem Schließen des einen Relais' wird beim zweiten Relais der zu einer Gleichspannungsquelle führende Leitungszug unterbrochen.

Die Gleichspannungsquelle dient hierbei der Stromversorgung des Elektromotors. Auf diese Weise wird der beim Abbremsen des Elektromotors durch die induzierte Spannung erzeugte Strom über den Leitungszug auf den Lastwiderstand geleitet. Durch entsprechende Wahl des Lastwiderstandes wird die erzeugte Bremsenergie über den Lastwiderstand abgebaut.

Als nachteilig erweist sich, dass die Verwendung von Relais oder Schaltern die Kosten des Systems erhöht und relativ viel Einbauraum beansprucht. Zudem fließt im Fall der Verwendung des Relais' ständig Strom durch die Relaisspule, damit das Relais nicht abfällt. Darüber hinaus unterliegen mechanische Schalter Verschleißerscheinungen, die durch Funkenschlag verstärkt werden, sowie der allgemeinen Störanfälligkeit gegenüber mechanischen Einwirkungen. Zudem arbeiten Schalter und Relais nur mit einer begrenzten Geschwindigkeit.

Aufgabe der vorliegenden Erfindung ist es, die Betriebssicherheit des Elektromotors zu erhöhen sowie dessen Verwendung als Einzelantrieb des Rotors einer Textilmaschine unter dem Aspekt der erhöhten Betriebssicherheit.

Diese Aufgabe wird erfindungsgemäß durch die kennzeichnenden Merkmale des Anspruchs 1 sowie verwendungsseitig durch die kennzeichnenden Merkmale des Anspruchs 14 gelöst.

Gemäß dem Anspruch 1 ist vorgesehen, dass die Motorschaltung derart eingerichtet ist, dass die Kurzschließung bei Passieren des Grenzwertes durch Ansteuerung eines oder mehrerer der von der Motorschaltung umfassten Halbleiterbauelemente durchführbar ist. Die Verwendung der von der Motorschaltung umfassten Halbleiterbauelemente zum Kurzschließen und somit zum Bremsen des Elektromotors hat den Vorteil, dass dadurch auf den Einbau eines oder mehrerer zusätzlicher Bauteile verzichtet werden kann, wodurch die Kosten des Elektromotors gegenüber Elektromotoren nach dem Stand der Technik gesenkt werden können.

Bevorzugt dienen zum Kurzschließen des Elektromotors die während des normalen Betriebs zur Phasensteuerung verwendeten Halbleiterbauelemente der Phasenbrücke, wodurch der Einsatz zusätzlicher schaltender Bauelemente, beispielsweise in Form von Relais, Schaltern oder zusätzlichen Halbleiterbauelementen und den gegebenenfalls zugehörigen Wirkverbindungen nicht erforderlich ist. Zudem ist kein zusätzlicher Einbauraum notwendig, der die Bauform des Elektromotors vergrößern würde. Hierzu ist eine ähnliche Anordnung der obengenannten Elemente aus dem Dokument DE 195 18 991 A1 bekannt. Darüber hinaus weisen die mechanischen Schalter beziehungsweise Relais nicht die Sicherheit auf, die durch kontaktloses Schalten aufgrund einer entsprechenden Ansteuerung der Halbleiterbauelemente gegeben ist. Insbesondere bei hohen Rotordrehzahlen ist das nahezu verzögerungsfreie Schalten bei Ausfall der Versorgungsspannung des Elektromotors besonders wichtig, um Beschädigungen zu vermeiden. Das kontaktlose Kurzschließen des Elektromotors mittels der Halbleiterbauelemente bei Passieren eines vorgebbaren Grenzwertes im generatorischen Betrieb ermöglicht es, den Grenzwert derart festzulegen, dass unmittelbar vor Erreichen des Grenzwertes der generatorische Betrieb durch das Kurzschließen beendet und der Elektromotor abgebremst wird, um Beschädigungen des Elektromotors und /oder von an den Elektromotor angeschlossenen Vorrichtungen zu vermeiden. Die Vorgebbarkeit des Grenzwertes erlaubt insbesondere eine flexible Anpassung des Abschaltzeitpunktes in Abhängigkeit von den verschiedenen Lastsituationen des im generatorischen Betrieb befindlichen erfindungsgemäßen Elektromotors. Somit ist der Zeitpunkt der Abschaltung entsprechend der jeweils vorliegenden Betriebsbedingungen bei Ausfall der Versorgungsspannung des Elektromotors variierbar.

Vorzugsweise können die der Phasensteuerung des Elektromotors dienenden Halbleiterbauelemente derart angesteuert werden, dass die Wicklungen des Elektromotors kurzgeschlossen werden. Das Erfordernis eines zusätzlichen regelbaren Widerstands, der an die Massenträgheit des Rotors anpassbar sein muss, um die während des generatorischen Betriebs erzeugte Spannung abzuleiten, ist nicht gegeben.

Insbesondere kann die Motorschaltung mindestens einen Energiespeicher umfassen, der nach Passieren des vorgebbaren Grenzwertes die Ansteuerung der Halbleiterbauelemente aufrechterhält, indem der Energiespeicher die notwendige Spannung zum Betrieb der Halbleiterbauelemente liefert. Auf diese Weise kann der Kurzschluss bis zum Stillstand des Rotors aufrechterhalten werden. Hierzu kann der Energiespeicher als mindestens ein Kondensator ausgeführt sein, der in Abhängigkeit von der Dauer des Abremsvorgangs mit einer entsprechenden Kapazität ausgeführt wird, um die Aufrechterhaltung der Ansteuerung der Halbleiterbauelemente zu realisieren.

Insbesondere kann die Motorschaltung derart eingerichtet sein, dass die Halbleiterelemente mit einem den Betriebszustand wiedergebenden Signal ansteuerbar sind. Beispielsweise kann hierzu das Kommutierungssignal zur Phasensteuerung verwendet werden, dessen Anliegen an der Motorschaltung den Betriebszustand als Antriebsmotor wiedergibt. Alternativ kann ein zusätzliches Signal generiert werden, das den Betriebszustand wiedergibt und der Ansteuerung der Halbleiterbauelemente dient.

Vorteilhafterweise kann der Elektromotor eine Messvorrichtung zur Überwachung der Istwerte aufweisen, die mit einer Steuerungsvorrichtung in Wirkverbindung steht. Die Steuerungsvorrichtung kann als Mikroprozessor ausgeführt sein, und einen wiederbeschreibbaren Speicher umfassen, wodurch es ermöglicht wird, mit geeigneten Eingabemitteln die zu überwachenden Grenzwerte einzugeben und zu speichern. Die Steuerungsvorrichtung wertet die von der Messvorrichtung erhaltenen Messwerte aus und vergleicht diese mit den vorgebbaren Grenzwerten. Anhand dieses Soll-Ist-Vergleiches erfolgt die Ansteuerung der Halbleiterbauelemente zur Kurzschließung der Wicklungen des Elektromotors während des generatorischen Betriebs. Vorzugsweise kann der Grenzwert oberhalb eines zur Aufrechterhaltung des Betriebs der Steuerungsvorrichtung und der Halbleiterbauelemente der Motorschaltung sinnvollen Schwellwertes des im generatorischen Betrieb arbeitenden Elektromotors festlegbar sein.

Die Messvorrichtung kann vorzugsweise als Vorrichtung zur Spannungs- und/oder Strommessung beziehungsweise Leistungsmessung ausgeführt sein, sodass bei Passieren des Grenzwertes für die im generatorischen Betrieb abgegebene Leistung beziehungsweise den generierten Strom die Kurzschließung der Wicklungen eingeleitet wird. Alternativ kann die Messvorrichtung als Drehzahlmessvorrichtung ausgeführt sein, sodass bei Passieren einer Grenzdrehzahl die Kurzschließung der Wicklungen des im generatorischen Betrieb arbeitenden Elektromotors erfolgt. Die Grenzdrehzahl kann dazu oberhalb eines Schwellwertes der Drehzahl festgelegt werden, die für die Aufrechterhaltung der Versorgungsspannung der Steuerungsvorrichtung und der Halbleiterbauelemente sinnvoll ist, wodurch die Betriebssicherheit erhöht werden kann.

Gemäß einer weiteren Ausführungsform kann die Motorschaltung ein Verzögerungsglied umfassen, durch das ein Zeitintervall als Grenzwert vorgebbar ist, nach dessen Überschreiten die Kurzschließung durch automatische Ansteuerung der Halbleiterbauelemente erfolgt. Das Verzögerungsglied wird das erst bei Umschaltung in den generatorischen Betrieb durch geeignete Ansteuerung mittels des den Betriebszustand wiedergebenden Signals aktiviert. Am Ende des vorgebbaren Zeitintervalls erfolgt die automatisierte Ansteuerung der Halbleiterbauelemente derart, dass diese Durchgeschaltet werden, wodurch der Kurzschluss der Wicklungen realisiert wird. Die Vorgabe der Dauer des Zeitintervalls kann in Abhängigkeit vom Auslaufverhalten des Rotors im generatorischen Betrieb des Elektromotors erfolgen, das im Wesentlichen durch die Massenträgheit des Rotors bestimmt wird.

Vorteilhafterweise können die zum Kurzschließen der Wicklungen verwendeten Halbleiterbauelemente als Transistoren ausgeführt sein. Dabei handelt es sich um die im Allgemeinen zur Phasensteuerung des Elektromotors verwendeten Transistoren der Phasenbrücke, mittels derer das phasenweise Takten des Stromflusses sowie der Stromflussrichtung erfolgt. Hierzu können die Transistoren als Feldeffekttransistoren oder bipolare Transistoren ausgeführt sein. Die entsprechende Verwendung von Thyristoren könnte gleichfalls in Betracht kommen.

Des Weiteren kann der Rotor berührungslos gelagert sein. Hierzu kann zur berührungslosen Lagerung des Rotors das Lager als Magnetlager ausgeführt sein. Der generatorische Betrieb ermöglicht es, die Magnetlagerfunktion aufrecht zu erhalten, wobei bei Passieren des Grenzwertes der Motor kurzgeschlossen wird, um unnötigen Verschleiß oder eine mögliche Beschädigung des Magnetlagers durch Taumelbewegungen des auslaufenden Rotors zu vermeiden.

Gemäß Anspruch 14 ist vorgesehen, dass die zur Phasensteuerung des Elektromotors vorgesehenen Halbleiterbauelemente der Phasenbrücke bei Passieren eines vorgebbaren Grenzwertes die Wicklungen des Elektromotors kontaktlos kurzschließen, um den Elektromotor abzubremsen, um somit unnötigen Verschleiß oder mögliche Beschädigungen des Elektromotors beziehungsweise von an diesen angeschlossenen Vorrichtungen zu vermeiden.

Vorteilhafte Weiterbildungen sind den Ansprüchen 15 bis 17 zu entnehmen. So kann der Elektromotor als Einzelantrieb eines Rotors einer Textilmaschine ausgeführt sein. Insbesondere kann es bei der Textilmaschine um eine Offenend-Rotorspinnmaschine handeln, die einen Spinnrotor aufweist, der auch als schaftloser Spinnrotor ausgebildet sein kann. Der Spinnrotor kann bei erfindungsgemäßer Verwendung als permanentmagnetischer Läufer des Elektromotors ausgebildet sein.
Weitere Einzelheiten der Erfindung sind einem nachfolgend anhand der Zeichnungen erläuterten Ausführungsbeispiel entnehmbar.

Es zeigt:

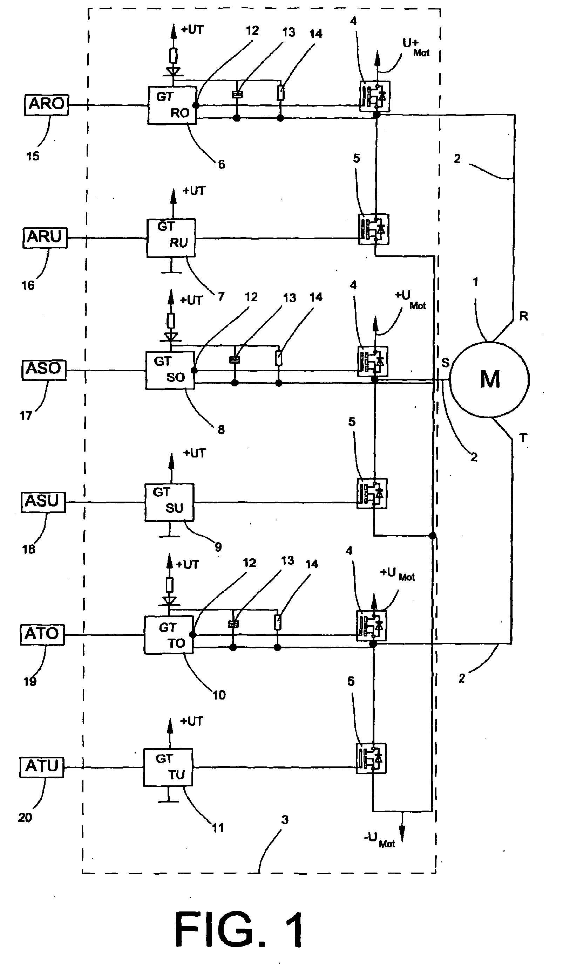

- Fig. 1: ein Blockschaltbild der Motorschaltung eines erfindungsgemäßen Elektromotors.

Die Darstellung in Fig. 1 zeigt einen 3-Phasen-Elektromotor 1, der beispielsweise in einer Textilmaschine als Einzelantrieb eines Rotors verwendbar ist. Der Rotor ist in der vorliegend beschriebenen Ausführungsform berührungslos gelagert. Zur berührungslosen Lagerung des Rotors ist eine Magnetlagerung vorgesehen, die aktiv oder passiv ausgeführt sein kann. Zur berührungslosen Lagerung kann auch eine Gaslagerung oder eine kombinierte Gas-/ Magnetlagerung zum Einsatz kommen. Der Rotor ist als permanentmagnetischer Läufer des Elektromotors 1 ausgeführt. Der Elektromotor 1 umfasst für jede Phase R, S, T eine Wicklung, die über Versorgungsleitungen 2 mit einer Versorgungsspannung V_{Mot} versorgt werden.

Zur Ansteuerung des Elektromotors 1 ist eine Motorschaltung 3 vorgesehen, die mit einer nicht dargestellten Steuerungsvorrichtung in Wirkverbindung steht. Bei der Steuerungsvorrichtung handelt es sich beispielsweise um einen Mikroprozessor sowie einen überschreibbaren EEPROM als Speicher.

Die Motorschaltung 3 umfasst mehrere Halbleiterbauelemente 4, 5, 6, 7, 8, 9, 10, 11, die in bekannter Weise der Steuerung der Phasen des 3-Phasen-Elektormotors 1 während des normalen Betriebs als Antrieb des Rotors dienen. Hierbei kommt insbesondere der Einsatz in einer Textilmaschine, beispielsweise in einer Offenend-Rotorspinnmaschine als Einzelantrieb eines Spinnrotors, in Betracht. Zur Ansteuerung der jeweiligen
Phase R, S, T steht die Steuerungsvorrichtung über Eingänge 15, 16, 17, 18, 19, 20 mit der Motorschaltung 3 in Verbindung. Die jeweiligen Eingänge 15, 16, 17, 18, 19, 20 sind entsprechend ihrer Zuordnung zur jeweiligen Phase R, S, T bezeichnet worden. Die Halbleiterbauelemente 4, 5, 6, 7, 8, 9, 10, 11 sind als untere Transistoren 4 und obere Transistoren 5 mit zugehörigen Gate-Treibern 6, 7, 8, 9, 10, 11 ausgeführt.

In dem in Fig. 1 dargestellten Blockschaltbild bezeichnet das Bezugszeichen 15 den Eingang zur Ansteuerung eines oberen Transistors 4 der Phase R (ARO), 16 den Eingang zur Ansteuerung eines unteren Transistors 5 der Phase R (ARU), 17 den Eingang zur Ansteuerung eines oberen Transistors 4 der Phase S (ASO), 18 den Eingang zur Ansteuerung des unteren Transistors 5 der Phase S (ASU), 19 den Eingang zur Ansteuerung des oberen Transistors 4 der Phase T (ATO) und 20 den Eingang zur Ansteuerung des unteren Transistors 5 der Phase T (ATU). Die im vorliegend beschriebenen Ausführungsbeispiel verwendeten oberen und unteren Transistoren 4, 5 sind als Feldeffekttransistoren ausgeführt. Alternativ sind auch bipolare Transistoren oder Thyristoren verwendbar.

Den jeweiligen Eingängen 15, 16, 17, 18, 19, 20 sind Gate-Treiber 6, 7, 8, 9, 10, 11 nachgelagert angeordnet, die gemäß ihrer Zuordnung zur jeweiligen Phase R, S, T bezeichnet worden sind. Hierbei bezeichnet 6 den Gate-Treiber des oberen Transistors 4 der Phase R (GTRO), 7 den Gate-Treiber des unteren Transistors 5 der Phase R (GTRU), 8 den Gate-Treiber des oberen Transistors 4 der Phase S (GTSO), 9 den Gate-Treiber des unteren Transistors 5 der Phase S (GTSU), 10 den Gate-Treiber des oberen Transistors 4 der Phase T (GTTO) und 11 den Gate-Treiber des unteren Transistors 5 der Phase T (GTTU). Die oberen Gate-Treiber GTRO 6, GTSO 8 und GTTO 10 weisen jeweils eine Negierungsfunktion 12 auf, mittels derer ein Steuersignal zur Ansteuerung des jeweiligen oberen Transistors 4 an die Steuerelektrode der oberen Transistoren 4 der Phasen R, S, T gesandt wird. Die genannten Halbleiterbauelemente 4, 5, 6, 7, 8, 9, 10, 11, 12 dienen der Phasensteuerung des Elektromotors 1 während des ordnungsgemäßen Betriebs als Antrieb und sind dem Fachmann in ihrer Anwendung und ihrer schaltungstechnischen Anordnung geläufig. Die Gate-Treiber 6, 7, 8, 9, 10, 11 werden mit einer Versorgungsspannung UT versorgt.

Den Gate-Treibern 6, 8, 10 sind jeweils in Parallelschaltung ein Kondensator 13 und ein Widerstand 14 zugeordnet, die ihrerseits über Leitungen mit dem Zufluss des jeweiligen oberen Transistors 4 der einzelnen Phasen R, S, T verbunden sind.

Weiterhin ist eine nicht dargestellte Messvorrichtung vorgesehen, die mit den Versorgungsleitungen 2 der jeweiligen Phase R, S, T und der Steuerungsvorrichtung verbunden ist. Die Messvorrichtung dient der in Fig. 1 beschriebenen Ausführungsform zur kontinuierlichen Messung der vom Elektromotor 1 bei Ausfall der Versorgungsspannung U_{Mot} im generatorischen Betrieb abgegebenen Leistung. Die Messvorrichtung leitet die Messwerte an die Steuerungsvorrichtung weiter, die diese auswertet und die Ergebnisse der Auswertung in Form eines Steuersignals, das den jeweiligen aktiven Betriebszustand wiedergibt, an die Eingänge 15, 17, 19 weiterleitet. Die Messvorrichtung kann alternativ derart ausgeführt sein, dass die Drehzahl des Rotors des im generatorischen Betrieb befindlichen Elektromotors 1 beziehungsweise der im generatorischen Betrieb abgegebene Strom überwacht wird.

Während des ordnungsgemäßen Betriebes des Elektromotors 1 steht die Versorgungsspannung U_{Mot} bereit, sodass an den Eingängen 15, 16, 17, 18, 19, 20 ein zur Phasensteuerung des Elektromotors 1 verwendetes entsprechendes Kommutierungssignal ansteht, das dem einen ordnungsgemäßen Betriebszustand wiedergebenden Steuersignal entspricht. Dieses Steuersignal mit dem logischen Wert "1" wird an die Gate-Treiber 6, 8, 10 weitergeleitet. Die Weiterleitung des Steuersignals an die Gate-Treiber 6, 8, 10 bewirkt, dass die Negierungsfunktion 12 den Wert des Steuersignals von "1" in "0" umwandeln, und dass das geänderte Steuersignal an die Steuerelektroden der jeweiligen oberen Transistoren 4 weitergeleitet wird. Die Schaltung der oberen Transistoren 4 ist derart gewählt, dass diese im Fall der vorliegenden Ansteuerung mit dem Steuersignal vom Wert "0" nicht durchgeschaltet werden.

Tritt ein Ausfall der Spannungsversorgung des Elektromotors 1 auf, bewirkt dies die automatische Umschaltung des Elektromotors 1 in den generatorischen Betrieb. Dadurch wird die Aufrechterhaltung des Betriebs der Steuerungsvorrichtung, der Motorschaltung 3 und insbesondere der der berührungslosen Lagerung dienenden Magnetlagerung des Rotors gewährleistet. Während des generatorischen Betriebs sinkt die Drehzahl des Rotors kontinuierlich ab, was das Absinken der vom Elektromotor 1 im generatorischen Betrieb erzeugten Leistung zur Folge hat. Dies führt dazu, dass die Magnetlagerfunktion und der Betrieb der Steuerungsvorrichtung bei Passieren eines vorgebbaren Grenzwertes der erzeugten Leistung des Elektromotors 1 im generatorischen Betrieb nicht mehr gewährleistet sind. Der Grenzwert liegt vorzugsweise oberhalb eines Schwellwertes, der durch das Unterschreiten der notwendigen Versorgungsleistung zur Aufrechterhaltung der Magnetlagerfunktion und des Betriebes der Steuerungsvorrichtung vorgegeben wird. Auf diese Weise wird sichergestellt, dass bei Ausfall der Versorgungsspannung V_{Mot} des Elektromotors 1 und der darauf folgenden Umschaltung in den generatorischen Betrieb der Bremsvorgang vor dem Absinken unterhalb des Schwellwertes eingeleitet wird.

Mit dem Passieren des vorgebbaren Grenzwertes der durch den Elektromotor 1 erzeugten Leistung liegt an den Eingängen 15, 17, 19 kein den normalen Betriebszustand signalisierendes Steuersignal vom Wert "1" mehr an, sondern das Steuersignal nimmt den logischen Wert "0" an. An die Gate-Treiber 6, 8, 10 wird daraufhin das Steuersignal mit dem Wert "0" weitergeleitet, welches durch die Negierungsfunktion 12 in das Steuersignal mit dem Wert "1" umgewandelt wird. Dies bewirkt die Ansteuerung der oberen Transistoren 4 der jeweiligen Phase R, S, T derart, dass diese durchschalten, was zur kontaktlosen Kurzschließung der Motorwicklungen der Phasen R, S, T führt. Auf diese Weise wird der Rotor gebremst, um zu verhindern, dass bei einem ungebremsten Auslaufen des Rotors im generatorischen Betrieb die Magnetlagerung des Rotors im Elektromotor 1 durch Taumelbewegungen unnötigem Verschleiß oder einer möglichen Beschädigung unterworfen ist.

Zur Aufrechterhaltung der Ansteuerung der oberen Transistoren 4 des aufgrund der Durchschaltung erzeugten Kurzschlusses der Wicklungen der Phasen R, S, T während des Abbremsens des Rotors bis zu dessen Stillstand, ist es erforderlich, die oberen Transistoren 4 über den Zeitpunkt der den Kurzschluss auslösenden Ansteuerung hinaus mit einer Versorgungsspannung zu versehen. Um die Durchschaltung der oberen Transistoren 4 über den Zeitpunkt des Kurzschließens hinaus aufrechtzuerhalten, werden die Kondensatoren 13 als Energiespeicher verwendet. Die Kondensatoren 13 werden durch die während des im generatorischen Betrieb befindlichen Elektromotors 1 erzeugte Spannung aufgeladen. Beim Eingehen des an die Gate-Treibern 6, 8, 10 weitergeleiteten Steuersignals mit dem Wert "0" und dem nachfolgend von der Negierungsfunktion 12 in den Wert "1" ungewandelten Steuersignals, werden die durchgeschalteten oberen Transistoren 4 durch die Kondensatoren 13 mit der erforderlichen Versorgungsspannung zur Aufrechterhaltung ihres Schaltzustandes versorgt. Die kapazitive Auslegung der Kondensatoren 13 bestimmt sich nach der Dauer des Bremsvorgangs des Rotors. Die Dauer des Bremsvorgangs kann dabei näherungsweise in einem Bereich von wenigen Millisekunden bis zu mehreren Sekunden liegen.

Eine alternative Ausführungsform des erfindungsgemäßen Elektromotors 1 sieht die Ansteuerung der unteren Transistoren 5 in der zuvor beschriebenen Weise vor, um die jeweiligen Wicklungen des Elektromotors 1 kurzzuschließen.

Des Weiteren können die zugehörigen Kondensatoren der Gate-Treiber 6, 7, 8, 9, 10 bei entsprechender Dimensionierung der Kapazitäten als Energiespeicher der Gate-Treiber 6, 8, 10 und der oberen Transistoren 4 beziehungsweise der Gate-Treiber 7, 9, 11 und der unteren Transistoren 5 dienen. Auf diese Weise lässt sich der Bauteilebedarf zusätzlich reduzieren.

Weiterhin kann anstelle oder zusätzlich zu der Messvorrichtung eine Vorrichtung zur zeitlichen Steuerung des Generatorbetriebes vorgesehen sein. Die Vorrichtung kann in Gestalt eines Verzögerungsgliedes ausgebildet sein und lässt innerhalb eines vordefinierten Zeitintervalls nach der Umschaltung in den generatorischen Betrieb das zum Kurzschluss der Wicklungen des Elektromotors 1 führende Signal von den Gate-Treibern 6, 7, 8, 9, 10, 11 erzeugen, um den Bremsvorgang des Rotors durch Kurzschließen der Wicklungen einzuleiten.

## Patentansprüche

1. Elektromotor (1), insbesondere für eine Textilmaschine, der bei Ausfall der Versorgungsspannung als Generator betreibbar ist, umfassend eine als Läufer des Elektromotors (1) ausgebildeten berührungslos gelagerten Rotor sowie eine Motorschaltung (3) zur Phasensteuerung des mehrphasigen Elektromotors (1), die mehrere Halbleiterbauelemente (4, 5, 6, 7, 8, 9, 10, 11) umfasst, wobei der Elektromotor (1) bei Passieren eines vorgebbaren Grenzwertes während des generatorischen Betriebs kurzschließbar ist,
**dadurch gekennzeichnet,**
- **dass** die Motorschaltung (3) derart eingerichtet ist, dass die Kurzschließung bei Passieren des Grenzwertes durch Ansteuerung eines oder mehrerer der von der Motorschaltung (3) umfassten Halbleiterbauelemente (4, 5, 6, 7, 8, 9, 10, 11) durchführbar ist.

2. Elektromotor (1) nach Anspruch 1, **dadurch gekennzeichnet, dass** die der Phasensteuerung des Elektromotors (1) dienenden Halbleiterbauelemente (4, 5, 6, 7, 8, 9, 10, 11) derart ansteuerbar sind, dass sie die Wicklungen des Elektromotors (1) kurzschließen.

3. Elektromotor (1) nach einem der Ansprüche 1 oder 2, **dadurch gekennzeichnet, dass** die Motorschaltung (3) mindestens einen Energiespeicher (13) umfasst, der nach Passieren des vorgebbaren Grenzwertes die Ansteuerung der Halbleiterbauelemente (4, 5, 6, 7, 8, 9, 10, 11) aufrechterhält.

4. Elektromotor (1) nach Anspruch 3, **dadurch gekennzeichnet, dass** der mindestens eine Energiespeicher (13) als Kondensator (13) ausgeführt ist.

5. Elektromotor (1) nach einem der Ansprüche 1 bis 4, **dadurch gekennzeichnet, dass** die Motorschaltung (3) derart eingerichtet ist, dass die Halbleiterelemente (4, 5, 6, 7, 8, 9, 10, 11) mit einem den Betriebszustand wiedergebenden Signal ansteuerbar sind.

6. Elektromotor (1) nach einem der Ansprüche 1 bis 5, **dadurch gekennzeichnet, dass** der Elektromotor (1) eine Messvorrichtung zur Überwachung der Istwerte aufweist, die mit einer Steuerungsvorrichtung in Wirkverbindung steht.

7. Elektromotor (1) nach Anspruch 6, **dadurch gekennzeichnet, dass** die Steuerungsvorrichtung als Mikroprozessor ausgeführt ist.

8. Elektromotor (1) nach einem der Ansprüche 6 oder 7, **dadurch gekennzeichnet, dass** die Messvorrichtung als Vorrichtung zur Spannungs- und/oder Strommessung ausgeführt ist.

9. Elektromotor (1) nach einem der Ansprüche 6 oder 7, **dadurch gekennzeichnet, dass** die Messvorrichtung als Drehzahlmessvorrichtung ausgeführt ist.

10. Elektromotor (1) nach einem der Ansprüche 1 bis 8, **dadurch gekennzeichnet, dass** die Motorschaltung (3) ein Verzögerungsglied umfasst, durch das ein Zeitintervall als Grenzwert vorgebbar ist, nach dessen Überschreiten die Kurzschließung durch automatische Ansteuerung der Halbleiterbauelemente (4, 5, 6, 7, 8, 9, 10, 11) erfolgt.

11. Elektromotor (1) nach einem der Ansprüche 1 bis 10, **dadurch gekennzeichnet, dass** die zum Kurzschließen der Wicklungen verwendeten Halbleiterbauelemente (4, 5) als Transistoren (4, 5) ausgeführt sind.

12. Elektromotor (1) nach Anspruch 11, **dadurch gekennzeichnet, dass** die Transistoren (4, 5) als Feldeffekttransistoren oder bipolare Transistoren ausgeführt sind.

13. Elektromotor (1) nach Anspruch 1 bis 12, **dadurch gekennzeichnet, dass** zur berührungslosen Lagerung des Rotors das Lager als ein Magnetlager ausgeführt ist.

14. Verwendung eines mehrphasigen Elektromotors (1) nach einem der Ansprüche 1 bis 13 als Einzelantrieb eines Rotors, **dadurch gekennzeichnet, dass** die zur Phasensteuerung des Elektromotors (1) vorgesehenen Halbleiterbauelemente (4, 5, 6, 7, 8, 9, 10, 11) der Phasenbrücke bei Passieren eines vorgebbaren Grenzwertes die Wicklungen des Elektromotors (1) kontaktlos kurzschließbar sind, um den Elektromotor (1) abzubremsen.

15. Verwendung nach Anspruch 14, **dadurch gekennzeichnet, dass** der Grenzwert oberhalb eines Schwellwertes zur Aufrechterhaltung des Betriebs der Steuerungsvorrichtung und der Halbleiterbauelemente (4, 5, 6, 7, 8, 9, 10, 11) des im generatorischen Betrieb arbeitenden Elektromotors (1) festlegbar ist.

16. Verwendung nach einem der Ansprüche 14 oder 15, **dadurch gekennzeichnet, dass** der Elektromotor (1) als Einzelantrieb eines Rotors einer Textilmaschine ausgeführt ist.

17. Verwendung nach Anspruch 16, **dadurch gekennzeichnet, dass** der Rotor als Spinnrotor einer Rotorspinnmaschine ausgeführt ist.

## Claims

1. Electric motor (1), in particular for a textile machine, which can be operated as a generator if the supply voltage fails, comprising a contactlessly mounted rotor configured as the armature of the electric motor (1) and a motor circuit (3) for the phase control of the multiphase electric motor (1), which comprises a plurality of semiconductor components (4, 5, 6, 7, 8, 9, 10, 11), wherein the electric motor (1) can be short-circuited if a predeterminable limit value is passed during generator operation, **characterised in that** the motor circuit (3) is set up in such a way that the short-circuiting on passing the limit value can be carried out by activating one or more of the semiconductor components (4, 5, 6, 7, 8, 9, 10, 11) comprised by the motor circuit (3).

2. Electric motor (1) according to claim 1, **characterised in that** the semiconductor components (4, 5, 6, 7, 8, 9, 10, 11) being used for the phase control of the electric motor (1) can be activated in such a way that they short-circuit the windings of the electric motor (1).

3. Electric motor (1) according to either of claims 1 or 2, **characterised in that** the motor circuit (3) comprises at least one energy store (13) which, after the predeterminable limit value has been passed, maintains the activation of the semiconductor components (4, 5, 6, 7, 8, 9, 10, 11).

4. Electric motor (1) according to claim 3, **characterised in that** the at least one energy store (13) is configured as a capacitor (13).

5. Electric motor (1) according to any one of claims 1 to 4, **characterised in that** motor circuit (3) is set up in such a way that the semiconductor elements (4, 5, 6, 7, 8, 9, 10, 11) can be activated by a signal reflecting the operating state.

6. Electric motor (1) according to any one of the claims 1 to 5, **characterised in that** the electric motor (1) has a measuring device for monitoring the actual values, which is in operative connection with a control device.

7. Electric motor (1) according to claim 6, **characterised in that** the control device is designed as a microprocessor.

8. Electric motor (1) according to either of claims 6 or 7, **characterised in that** the measuring device is designed as a device for voltage and/or current measurement.

9. Electric motor (1) according to either of claims 6 or 7, **characterised in that** the measuring device is designed as a rotational speed measuring device.

10. Electric motor (1) according to any one of claims 1 to 8, **characterised in that** the motor circuit (3) comprises a delay member, by means of which a time interval can be predetermined as a limit value, and once this has been exceeded, the short-circuiting takes place by means of automatic activation of the semiconductor components (4, 5, 6, 7, 8, 9, 10, 11).

11. Electric motor (1) according to any one of claims 1 to 10, **characterised in that** the semiconductor components (4, 5) used to short-circuit the windings are designed as transistors (4, 5).

12. Electric motor (1) according to claim 11, **characterised in that** the transistors (4, 5) are designed as field effect transistors or bipolar transistors.

13. Electric motor (1) according to claims 1 to 12, **characterised in that** for the contactless mounting of the rotor, the bearing is designed as magnetic bearing.

14. Use of a multi-phase electric motor (1) according to any one of claims 1 to 13 as the single drive of a rotor, **characterised in that** the semiconductor components (4, 5, 6, 7, 8, 9, 10, 11) of the phase bridge provided for the phase control of the electric motor (1), on passing a predeterminable limit value, contactlessly short-circuit the windings of the electric motor (1) to brake the electric motor (1).

15. Use according to claim 14, **characterised in that** the limit value can be fixed above a threshold value for maintaining the operation of the control device and the semiconductor components (4, 5, 6, 7, 8, 9, 10, 11) of the electric motor (1) operating in generator operation.

16. Use according to either of claims 14 or 15, **characterised in that** the electric motor (1) is designed as the single drive of a rotor of a textile machine.

17. Use according to claim 16, **characterised in that** the rotor is designed as the spinning rotor of a rotor spinning machine.

## Revendications

1. Moteur électrique (1), en particulier pour une machine textile, qui peut fonctionner comme un générateur en cas de panne de l'alimentation électrique, comprenant un rotor monté sans contact configuré comme induit du moteur électrique (1) ainsi qu'un circuit de moteur (3) pour la commande des phases du moteur électrique polyphasé (1), qui comprend plusieurs composants à semi-conducteurs (4, 5, 6, 7, 8, 9, 10, 11), le moteur électrique (1) pouvant être court-circuité en cas de passage d'une valeur limite prédéfinissable pendant le fonctionnement en générateur,
**caractérisé en ce,**
**que** le circuit de moteur (3) est réalisé de façon que le court-circuitage en cas de passage de la valeur limite peut être réalisé par activation d'un ou plusieurs des composants à semi-conducteurs (4, 5, 6, 7, 8, 9, 10, 11) compris par le circuit de moteur (3).

2. Moteur électrique (1) selon la revendication 1, **caractérisé en ce que** les composants à semi-conducteurs (4, 5, 6, 7, 8, 9, 10, 11) servant à la commande des phases du moteur électrique (1) peuvent être activés de façon qu'ils court-circuitent les enroulements du moteur électrique (1).

3. Moteur électrique (1) selon l'une des revendications 1 ou 2, **caractérisé en ce que** le circuit de moteur (3) comprend au moins un accumulateur d'énergie (13) qui maintient l'activation des composants à semi-conducteurs (4, 5, 6, 7, 8, 9, 10, 11) après passage de la valeur limite prédéfinissable.

4. Moteur électrique (1) selon la revendication 3, **caractérisé en ce que** ledit au moins un accumulateur d'énergie (13) est réalisé sous la forme d'un condensateur (13).

5. Moteur électrique (1) selon l'une des revendications 1 à 4, **caractérisé en ce que** le circuit de moteur (3) est réalisé de façon que les composants à semi-conducteurs (4, 5, 6, 7, 8, 9, 10, 11) peuvent être activés par un signal représentant l'état de fonctionnement.

6. Moteur électrique (1) selon l'une des revendications 1 à 5, **caractérisé en ce que** le moteur électrique (1) présente un dispositif de mesure pour la surveillance des valeurs réelles, lequel coopère fonctionnellement avec un dispositif de commande.

7. Moteur électrique (1) selon la revendication 6, **caractérisé en ce que** le dispositif de commande est réalisé sous la forme d'un microprocesseur.

8. Moteur électrique (1) selon l'une des revendications 6 ou 7, **caractérisé en ce que** le dispositif de mesure est réalisé sous la forme d'un dispositif de mesure de tension et/ou de courant.

9. Moteur électrique (1) selon l'une des revendications 6 ou 7, **caractérisé en ce que** le dispositif de mesure est réalisé sous la forme d'un dispositif de mesure de vitesse de rotation ou de régime.

10. Moteur électrique (1) selon l'une des revendications 1 à 8, **caractérisé en ce que** le circuit de moteur (3) comprend un élément de retard ou de temporisation qui permet de prédéfinir comme valeur limite un intervalle de temps après le dépassement duquel le court-circuitage se produit par activation automatique des composants à semi-conducteurs (4, 5, 6, 7, 8, 9, 10, 11).

11. Moteur électrique (1) selon l'une des revendications 1 à 10, **caractérisé en ce que** les composants à semi-conducteurs (4, 5) utilisés pour court-circuiter les enroulements sont réalisés sous la forme de transistors (4, 5).

12. Moteur électrique (1) selon la revendication 11, **caractérisé en ce que** les transistors (4, 5) sont réalisés sous la forme de transistors à effet de champ ou de transistors bipolaires.

13. Moteur électrique (1) selon l'une des revendications 1 à 12, **caractérisé en ce que** pour le montage sans contact du rotor, le palier est réalisé sous la forme d'un palier magnétique.

14. Utilisation d'un moteur électrique polyphasé (1) selon l'une des revendications 1 à 13 comme entraînement individuel d'un rotor, **caractérisée en ce que** les composants à semi-conducteurs (4, 5, 6, 7, 8, 9, 10, 11) du pont de phase qui sont prévus pour la commande des phases du moteur électrique (1) peuvent court-circuiter sans contact les enroulements du moteur électrique (1) en cas de passage d'une valeur limite prédéfinissable pour freiner le moteur électrique (1).

15. Utilisation selon la revendication 14, **caractérisée en ce que** la valeur limite peut être définie au-dessus d'une valeur seuil permettant le maintien du fonctionnement du dispositif de commande et des composants à semi-conducteurs (4, 5, 6, 7, 8, 9, 10, 11) du moteur électrique (1) fonctionnant en mode générateur.

16. Utilisation selon l'une des revendications 14 ou 15, **caractérisée en ce que** le moteur électrique (1) est réalisé sous la forme d'un entraînement individuel d'un rotor d'une machine textile.

17. Utilisation selon la revendication 16, **caractérisée en ce que** le rotor est réalisé sous la forme d'un rotor de filage d'un métier à filer à rotor.
